# EUROPÄISCHE PATENTSCHRIFT

(11) **EP 3 431 149 B1**
(45) Veröffentlichungstag und Bekanntmachung des Hinweises auf die Patenterteilung: **25.11.2020**
(21) Anmeldenummer: 17181859.4
(22) Anmeldetag: 18.07.2017
(51) Int. Cl.: A62C 13/62, G01L 19/12, G01L 27/00, A62C 37/50, G01L 15/00

(54) **VERFAHREN UND VORRICHTUNG ZUR FERNÜBERWACHUNG VON FEUERLÖSCHGERÄTEN ODER -ANLAGEN**
METHOD AND DEVICE FOR REMOTE MONITORING OF FIRE EXTINGUISHING DEVICES OR SYSTEMS
PROCÉDÉ ET DISPOSITIF DE SURVEILLANCE À DISTANCE D'EXTINCTEURS OU D'INSTALLATIONS D'EXTINCTION D'INCENDIE

(43) Veröffentlichungstag der Anmeldung: 23.01.2019
(73) Patentinhaber: Kammer, Peter, 4532 Feldbrunnen (CH)
(72) Erfinder: Kammer, Peter, 4532 Feldbrunnen (CH)
(74) Vertreter: Kieffer, Valentin

(56) Entgegenhaltungen:
- EP-A2- 2 759 823
- EP-B1- 1 311 323
- EP-B1- 2 938 410
- FR-A1- 2 554 233
- Anonymous: "INTELLIGENT CONTROL GAUGE DOUBLE INDICATION DIGITAL AND ANALOGUE TYPE EMPEO 2 AND EMPEO 3 (WITH ANALOGUE OUTPUT SIGNAL 4-20 mA)", , 31. Mai 2012 (2012-05-31), XP055420352, Gefunden im Internet: URL:http://empeo.de/media/files_public/kqi tkksvpl/Empeo2english.pdf [gefunden am 2017-10-31]

## Beschreibung

Die vorliegende Erfindung betrifft ein Verfahren zur Fernüberwachung von Feuerlöschgeräten oder -anlagen gemäß Oberbegriff des Patentanspruchs 1 und eine Vorrichtung zur Fernüberwachung von Feuerlöschgeräten oder -anlagen gemäß Oberbegriff des Patentanspruchs 8.

Zur Bekämpfung von Bränden in Gebäuden und in Verkehrsmitteln werden häufig stationäre oder tragbare Feuerlöschgeräte oder -anlagen eingesetzt, beispielsweise fixe Sprinkleranlagen oder flaschenartige tragbare Feuerlöscher. Diesen Vorrichtungen gemeinsam ist, dass sie ein unter Druck stehendes Löschmittel beinhalten, welches im Brandfall mit einer definierten Durchflussmenge und Geschwindigkeit in Richtung des Brandguts ausgebracht werden soll. Bei einem Druckverlust sind diese Anlagen also weniger effizient und können sogar komplett nicht mehr funktionieren. Neben einer regelmäßigen Überprüfung von solchen Feuerlöschgeräten oder - anlagen können Versicherungsgesellschaften und auch der Gesetzgeber vorschreiben, dass die Funktionsfähigkeit der Feuerlöschgeräte oder -anlagen ständig bzw. regelmäßig überwacht und eine vorgegebene, beispielsweise durch langsamen Druckabfall im Löschmittelbehälter oder Verstopfung der Rohrnetze entstehende Abweichung vom Druck des Löschmittels sofort festgestellt und signalisiert wird. Zusätzlich müssen bei bestimmten kritischen Installationen in definierten Zeitabständen Zustandskontrollen oder Inspektionen durchgeführt werden. Die Resultate und Protokolle dieser Kontrollen und Inspektionen werden in Zukunft vermehrt als Datensätze gespeichert werden müssen, sowie unter Umständen elektronisch an eine zentrale Kontrollstelle und/oder eine dafür vorgesehene Datenbank übermittelt werden.

Im Stand der Technik werden verschiedene Lösungen zur Echtzeitüberwachung von Feuerlöschgeräten oder -anlagen mit Übertragung eines Kontrollsignals an eine zentrale Überwachungsstelle vorgestellt.

In der EP1311323B1 wird eine Vorrichtung für die Ferninspektion von tragbaren Feuerlöschern vorgestellt, mit einem Manometer, welches an einem tragbaren Feuerlöscher montiert ist, und einer elektronischen Schaltung zum Ausgeben eines drahtlosen Signals an eine entfernte Zentralstation, wenn der Druckzustand des Löschmittels sich außerhalb des zulässigen Bereichs befindet. Ähnliche Vorrichtungen werden in der EP2938410B1 und in der EP2759823A2 offenbart. Der Druck des Löschmittels im Behälter ist abhängig von der jeweils vor Ort herrschenden Temperatur. Um dies zu berücksichtigen, erfolgt gemäß EP2759823A2 die Schwundüberwachung des im Behälter befindlichen Löschmittels durch das Vergleichen des temperaturkompensierten Gasdruckes mit einer Referenzkennlinie, wobei die Referenzkennlinie aus spezifischen Kenngrößen des Gases hinsichtlich Temperatur und Druck gebildet ist.

Ein wesentlicher Mangel der bestehenden Vorrichtungen ist, dass Manometer empfindliche Messgeräte sind, welche über die Jahre unrichtige Druckwerte vermitteln können. Im Sinne der Erfindung sind Manometer als beliebige analoge oder digitale Druckmess- und/oder Anzeigegeräte zu verstehen. Übliche Manometer bestehen aus beweglichen Messteilen, welche sich unter dem Druck des Löschmittels, aufgrund chemischer Reaktionen oder der Einwirkung von Dämpfen elastisch verformen. Diese Messteile sind mit einem Zeiger oder einem elektronischen Sensor verbunden, welcher von dieser Bewegung bzw. Verformung einen Druckwert ableitet. Bei Feuerlöschgeräten oder -anlagen stehen die Manometer meistens jedoch jahrelang reglos, in Kontakt mit stehendem Löschmittel und unter unverändertem Druck. Dabei können sich Ablagerungen des Löschmittels im Manometer ansammeln und festsetzen und die Funktion der beweglichen Teilen beeinträchtigen oder diese sogar blockieren. Im Laufe der Zeit kann sich außerdem Kondenswasser im Manometer bilden, mithin metallische Teile korrodieren können. Auch können die Manometer Fabrikationsfehler aufweisen, welche die Einwandfreie Funktion der Messgeräte beeinträchtigen. Bei den bekannten Vorrichtungen besteht also die Gefahr, dass die Manometer erstarren, nicht immer den aktuellen Druckzustand vermitteln, und ein Druckverlust des Löschmittels nicht sofort festgestellt wird. Dieses Phänomen ist dem Fachmann bestens bekannt, mithin es bei manuellen Überwachungen der Druckwerte üblich ist, zuerst mit dem Finger leicht auf das Manometer zu klopfen, um allfällige festsitzende Messteile zu lösen. In dafür geeigneten Manometern ist möglich mittels eines Magneten oder eines magnetischen Impulses den Zeiger des Manometers zu bewegen, um die Funktionsfähigkeit zu überprüfen, wie es in der FR2554233A1 vorgesehen ist.

Im Dokument "INTELLIGENT CONTROL GAUGE DOUBLE INDICATION DIGITAL AND ANALOGUE TYPE EMPEO 2 AND EMPEO 3 (WITH ANALOGUE OUTPUT SIGNAL 4-20 mA)" (Gefunden im Internet: http://empeo.de/media/ files_public/kqitkksvpl/Empeo2english.pdf [gefunden am 2017-10-31]) ist ein Manometer mit Doppelanzeige beschrieben. Beide Messsysteme, analog und digital, sind redundant und messen unabhängig voneinander. Sollte es zu einer Abweichung eines Messsystems kommen, erkennt dies der Anwender sofort und kann direkt handeln, er wird keine Fehlmessungen durchführen und lässt das Gerät überprüfen. Die Wahrscheinlichkeit, dass beide Messsysteme gleichzeitig falsche Werte anzeigen, geht gegen Null.

Die vorliegende Erfindung stellt sich nunmehr die Aufgabe, ein Verfahren und eine Vorrichtung zur Fernüberwachung von Feuerlöschgeräten oder -anlagen der eingangs genannten Art derart zu verbessern, dass die Druckwerte des Löschmittels zuverlässiger ermittelt werden und das Risiko, dass ein kritischer Druckabfall unbemerkt bleibt, verringert wird.

Diese Aufgabe löst ein Verfahren zur Fernüberwachung von Feuerlöschgeräten oder -anlagen gemäß Oberbegriff des Patentanspruchs 1 und eine Vorrichtung zur Fernüberwachung von Feuerlöschgeräten oder -anlagen gemäß Oberbegriff des Patentanspruchs 9. Weitere Merkmale und Ausführungsbeispiele gehen aus den abhängigen Ansprüchen hervor und deren Vorteile sind in der nachfolgenden Beschreibung erläutert.

Grundlage der Erfindung sind ein Verfahren und eine Vorrichtung zur Fernüberwachung des Druckzustands eines Feuerlöschmittels in einem Feuerlöschgerät oder - anlage mit mindestens zwei Manometern. Erfindungsgemäß ist vorgesehen, dass die Plausibilität der Messwerte der Manometer, sowie deren Funktionsfähigkeit eingeschätzt wird, so dass die Vorrichtung auch autonom ihre eigene Funktionsfähigkeit überwachen kann.

Die Funktionsfähigkeit der Manometer wird durch gegenseitigen Vergleich ihrer Messwerte ermittelt: Inkonsistente Messwerte sind ein Zeichen eines oder mehrerer defekten Manometer oder eines anderen Fehlers. Wenn aus dem Vergleich hervorgeht, dass ein oder mehrere Manometer inkonsistente Messwerte angeben, wird eine Fehlermeldung ausgelöst. Bei Manometern die dazu geeignet und allenfalls entsprechend ausgerüstet sind, kann durch bewegen eines Magnets oder durch einen Magnetischen Impuls die grundsätzliche Funktionsfähigkeit des Zeigers überprüft werden. Defekte und funktionsfähige Manometer können mit relativer Gewissheit identifiziert werden, falls mehrere Manometer übereinstimmende und nur einzelne Manometer inkonsistente Messwerte angeben. Dies ist auch der Fall, wenn die Vorrichtung nur zwei Manometer aufweist und ein Manometer einen plausiblen und das andere Manometer einen absurden (z. B viel zu großen) Messwert angibt. Solange funktionsfähige Manometer mit Gewissheit identifiziert werden können, wird die Überwachung des Feuerlöschgeräts oder -anlage weiterhin gewährleistet, mithin den Wartungs- oder Sicherheitsbeauftragten eine bessere Sichtbarkeit und Flexibilität für die Planung der Wartungsarbeiten oder der Ersatz von defekten Manometern bzw. Feuerlöscher gegeben wird, bevor diese vordringlich werden.

Inkonsistente oder nicht übereinstimmende Messwerte sind vorliegend Messwerte, die übermäßig voneinander abweichen. Der Grenzwert, ab dem eine Abweichung der Messwerte zwischen den Manometern das Zeichen einer Fehlerfunktion eines Manometers ist, hängt von den verwendeten Manometern ab, insbesondere von ihrer Messpräzision. Beispielsweise können bei empfindlichen Manometern auch schon äußerst geringe Abweichungen der Messwerte ein Symptom eines defekten Manometers sein und umgekehrt. Wichtig ist also, dass der gegenseitige Vergleich der Messwerte unter Berücksichtigung der technischen Spezifikationen der Manometer vorgenommen wird. Zum Beispiel könnte eine Fehlermeldung ausgelöst werden, falls zwei identische Manometer mit einer Messpräzision von ± 100 mbar denselben Druck angeben sollten und die gemessenen Druckwerte voneinander um mehr als 200 mbar abweichen.

In einer besonders vorteilhaften Ausführungsvariante der Erfindung werden die Messwerte der Manometer nicht nur miteinander, sondern auch mit einem oder mehreren Sollwerten verglichen. Somit kann eine Fehlermeldung ausgelöst werden, falls ein Manometer oder mehrere Manometer Messwerte angeben, welche vorbestimmte Grenzwerte unter- bzw. überschreiten. Um unrichtige Fehlermeldungen zu vermeiden, ist es in Kombination mit dem gegenseitigen Vergleich der Messwerte außerdem denkbar, defekte Manometer automatisch vom Vergleich mit dem Sollwert auszuschließen, da sie sowieso inkonsistente/falsche Messwerte angeben.

Besonders vorteilhaft ist es, wenn die Druckwerte laufend ermittelt und verglichen werden. Dann können diese Messwerte und/oder allfällige Fehlermeldungen lokal angezeigt werden und/oder an eine ferne Kontrolleinheit dynamisch übermittelt werden. Falls keine laufende Überwachung nötig ist, können die Ermittlung der Druckwerte, die Vergleiche und/oder die Übermittlung der Daten auch nur auf Abfrage erfolgen. Je nach Ausführungsvariante wird die Abfrage von der fernen Kontrolleinheit dynamisch ausgelöst oder lokal, z. B. durch Drücken eines Knopfs der Vorrichtung.

In einer anderen Ausführungsvariante ist vorgesehen, dass die ermittelten Druckwerte oder Zustandsangaben elektronisch an eine zentrale Kontrollstelle oder Datenbank übermittelt werden, so dass Vergleiche mit Referenzwerten bzw. früheren Messwerten problemlos und ohne Abhängigkeit vom Messgerät oder der Kontrolleinheit vorgenommen werden können. Dies ist insbesondere von größerem Nutzen, wenn die Daten über Datenverbindungen vollautomatisch direkt übermittelt werden.

Die erfindungsgemäße Vorrichtung besteht aus mindestens zwei Manometern, welche den Druck des Löschmittels unabhängig voneinander messen, und einer Vergleichseinheit, welche die Druckwerte abliest und miteinander und/oder mit einem oder mehreren vordefinierten Sollwerten vergleicht.

In einer möglichen Ausführungsvariante der Erfindung sind die Manometer in isobaren Bereichen des Feuerlöschgeräts oder -anlage angeordnet, mithin sie die gleichen Druckwerte ermitteln sollten. Eine zu große Abweichung zwischen den Druckwerten ist also das Zeichen einer Fehlfunktion mindestens eines Manometers oder eines anderen Fehlers.

Die Manometer können nebeneinander an derselben Stelle oder an zwei separaten Stellen des Feuerlöschgeräts oder -anlage angeordnet werden. In einer besonders vorteilhaften Ausführungsvariante liegt die erfindungsgemäße Vorrichtung mit gesamten Manometern in Form eines einzelnen und kompakten Teils vor. Damit die Manometer jedoch voneinander möglichst unabhängig sind und denselben Beschädigungen nicht zwingend gleichzeitig ausgesetzt werden (lokale Ablagerungen, die beide Manometer gleichzeitig verstopfen, Vibrationen usw.), ist es vorteilhaft, wenn sie möglichst weit voneinander entfernt angeordnet sind. Wichtig ist dabei, dass die Manometer keine gemeinsamen funktionelle Teile und insbesondere eine separate Mündung zum Inneren des Feuerlöschgeräts bzw. -anlage aufweisen, um zu vermeiden, dass ein Teildefekt gleichzeitig mehrere Manometer beeinflusst.

In einer weiteren Ausführungsvariante weist die Vorrichtung unterschiedliche Manometer auf. Beispielweise können die Druckwerte mit einem feinen, empfindlichen Hauptmanometer gemessen werden, und zur Kontrolle mit den Werten gröberer aber robusteren Kontrollmanometer verglichen werden. Somit werden gleichzeitig eine gute Genauigkeit und eine bessere Zuverlässigkeit der Vorrichtung gewährleistet.

Besonders vorteilhaft ist es, wenn die Vorrichtung eine Anzeigeeinheit zum Anzeigen der Messwerte und/oder allfälliger Fehlermeldungen aufweist. Die Anzeigeeinheit kann beispielsweise ein Zifferblatt mit einem beweglichen Zeiger sein, oder eine Digitalanzeige. In der bevorzugten Ausführungsvariante weist die Vorrichtung zusätzlich oder stattdessen eine Übertragungseinheit zur Übertragung der Messwerte und/oder allfälliger Fehlermeldungen an eine ferne Kontrolleinheit. Je nach Ausführungsvariante erfolgt die Übertragung der Daten mit einer Kabelverbindung oder drahtlos, z. B. über eine Wifi oder Bluetooth Verbindung oder ein anderes übliches drahtloses Protokoll. Die ferne Kontrolleinheit kann z. B. ein Smartphone oder ein Tablet sein, auf welchem eine entsprechende App zur Kommunikation mit der erfindungsgemäßen Vorrichtung installiert ist. Die Übertragung der Daten erfolgt beispielsweise dynamisch, sobald eine Fehlfunktion erkannt wird, oder auf Abfrage der fernen Kontrolleinheit oder sogar automatisch, sobald sich die Kontrollvorrichtung in der Nähe der erfindungsgemäßen Vorrichtung befindet. Ein Wartungsbeauftragter könnte somit einfach an den Vorrichtungen vorbeigehen, und automatisch Meldungen oder Messwerte auf seinem mobilen Gerät (der Kontrollvorrichtung) erhalten.

In der Praxis weisen die Manometer oft ferromagnetische bewegliche Messteile auf, beispielsweise einen ferromagnetischen Zeiger, welche mit einem magnetischen Feld bewegt werden können. In einer besonders vorteilhaften Ausführungsvariante der Erfindung sind die Manometer mit einer Magnetspule versehen, welche als Elektromagnet wirken kann, wenn daran ein elektrischer Strom angelegt wird. Wird der Magnetspule ein elektrischer Impuls gegeben, generiert sie einen magnetischen Impuls, welcher seinerseits die beweglichen ferromagnetischen Messteile der Manometer leicht bewegt. Ein solcher Impuls kann den Messteilen vor jeder Druckmessung gegeben werden, um zu prüfen, ob sie sich festgesetzt haben oder immer noch funktionsfähig sind. Die Bewegung der Messteile kann entweder visuell festgestellt werden, z. B. durch Erkennen der Bewegung eines Zeigers, oder automatisch, z. B. durch Feststellung einer vorübergehenden Schwankung des gemessenen Druckwerts beim Impuls. Falls sich nichts bewegt oder ändert ist davon auszugehen, dass sich bewegliche Teile des Manometers festgesetzt haben und eine Fehlermeldung wird ausgelöst. Möglich ist ebenfalls, den Impuls den Messteilen in regelmäßigen Zeitabständen zu geben, als Vorbeugemaßnahme gegen die Festsetzung. Der Impuls kann von der Vorrichtung selbst autonom ausgelöst werden, oder manuell vom Benutzer der fernen Kontrolleinheit.

Mit den vorgestellten Maßnahmen werden ein Verfahren und eine Vorrichtung zur Fernüberwachung des Druckzustands eines Feuerlöschmittels in einem Feuerlöschgerät oder -anlage bereitgestellt, welche Vorrichtung auch autonom ihre eigene Funktionsfähigkeit überwacht und einschätzt. Verfahren und Vorrichtung sind sowohl für tragbare Geräte (Feuerlöscher) wie auch für fixe Anlagen (Rohrnetze) vorgesehen und geeignet.

## Patentansprüche

1. Verfahren zur Fernüberwachung eines Feuerlöschgeräts oder -anlage, wobei das Feuerlöschgerät oder -anlage ein unter Druck stehendes Löschmittel enthält, und mindestens zwei Manometer jeweils einen Druckwert des Löschmittels unabhängig voneinander messen,
**gekennzeichnet durch** die folgenden Verfahrensschritte:
a) Berechnung der Abweichung zwischen den gemessenen Druckwerten von jeweils zwei Manometern;
b) Vergleich einer in Schritt a) berechneten Abweichung mit einem Grenzwert;
c) Falls eine Abweichung der Messwerte zwischen zwei Manometern den Grenzwert überschreitet: Plausibilitätsprüfung dieser Messwerte und Identifikation eines oder mehrerer defekten Manometer;
d) Vergleich der gemessenen Druckwerte der Manometer mit mindestens einem Sollwert, wobei im Schritt c) als defekt identifizierte Manometer von diesem Vergleich ausgeschlossen werden,
e) Ausgabe einer Fehler- oder Zustandsmeldung aus den Vergleichen der gemessenen Druckwerte miteinander und/oder mit dem Sollwert.

2. Verfahren gemäss Anspruch 1,
**dadurch gekennzeichnet, dass**
eine Fehlermeldung ausgelöst wird, falls aus dem gegenseitigen Vergleich der gemessenen Druckwerte hervorgeht, dass mindestens zwei Manometer inkonsistente Messwerte angeben.

3. Verfahren gemäss Anspruch 2,
**dadurch gekennzeichnet, dass**
eine Fehlermeldung ausgelöst wird, wenn mindestens ein Manometer anzeigt, dass der Druck einen festgelegten Minimaldruck unterschreitet oder einen festgelegten Maximaldruck überschreitet.

4. Verfahren gemäss einem der vorhergehenden Ansprüche,
**dadurch gekennzeichnet, dass**
die gemessenen Druckwerte und/oder allfällige Fehlermeldungen einer fernen Kontrolleinheit mit Kabelverbindung oder drahtlos übermittelt werden.

5. Verfahren gemäss Anspruch 4,
**dadurch gekennzeichnet, dass**
die gemessenen Druckwerte und/oder allfällige Fehlermeldungen der fernen Kontrolleinheit übermittelt werden, sobald diese sich in der Nähe der Manometer befindet.

6. Verfahren gemäss Anspruch 1,
**dadurch gekennzeichnet, dass**
die Funktionsfähigkeit der Manometer geprüft wird, indem bewegliche ferromagnetische Teile der Manometer einem magnetischen Impuls ausgesetzt werden und ihre anschliessende Bewegung visuell oder automatisch aufgrund der vorübergehenden Schwankung der angezeigten Druckwerten festgestellt wird, und falls die erwartete Schwankung nicht stattfindet, eine Fehlermeldung ausgelöst wird.

7. Verfahren gemäss Anspruch 1,
**dadurch gekennzeichnet, dass**
bewegliche ferromagnetische Teile der Manometer als Vorbeugemassnahme gegen die Festsetzung regelmässig einem magnetischen Impuls ausgesetzt werden, damit sie sich bewegen.

8. Vorrichtung zur Fernüberwachung eines Feuerlöschgeräts oder -anlage, wobei das Feuerlöschgerät oder -anlage ein unter Druck stehendes Löschmittel enthält, wobei die Vorrichtung mindestens zwei Manometer aufweist, welche jeweils einen Druckwert des Löschmittels unabhängig voneinander messen,
**gekennzeichnet durch** eine Vergleichseinheit welche eigens dafür konzipiert ist, die gemessenen Druckwerte miteinander selbst zu vergleichen und selbst zu prüfen, ob eine Abweichung der Messwerte zwischen den Manometern einen Grenzwert überschreitet, und anhand einer Plausibilitätsprüfung der Messwerte einen oder mehrere defekte Manometer selbst zu identifizieren, und die gemessenen Druckwerte mit mindestens einem Sollwert selbst zu vergleichen, wobei die als defekt identifizierten Manometer von diesem Vergleich ausgeschlossen sind, und aus den Vergleichen der gemessenen Druckwerte miteinander oder mit dem Sollwert eine Fehler- oder Zustandsmeldung selbst zu ermitteln.

9. Vorrichtung gemäss Anspruch 8,
**dadurch gekennzeichnet, dass**
die Vorrichtung eine Übertragungseinheit aufweist, welche die ermittelten Druckwerte, die Fehler- oder Zustandsmeldungen mit Kabelverbindung oder mit drahtloser Verbindung übermittelt.

10. Vorrichtung gemäss Anspruch 8,
**dadurch gekennzeichnet, dass**
die Vorrichtung eine Anzeigeeinheit aufweist, welche die ermittelten Druckwerte, die Fehler- oder Zustandsmeldungen anzeigt.

11. Vorrichtung gemäss Anspruch 8,
**dadurch gekennzeichnet, dass**
die Vorrichtung in Form eines einzelnen und kompakten Teils vorliegt.

12. Vorrichtung gemäss Anspruch 8,
**dadurch gekennzeichnet, dass**
jedes Manometer bewegliche ferromagnetische Teile aufweist und mit einer Magnetspule versehen ist, an welcher die Vorrichtung einen elektrischen Impuls anlegen kann, um einen magnetischen Impuls zu generieren, welcher die ferromagnetischen Teile bewegt.

## Claims

1. Method for remote monitoring of a fire extinguishing device or installation, wherein the fire extinguishing device or installation contains an extinguishing agent under pressure, and at least two manometers each measure a pressure value of the extinguishing agent independently of one another,
**characterised by** the following process steps:
a) calculation of the deviation between the measured pressure values of two manometers;
b) comparison of a deviation calculated in step a) with a limit value;
c) if a deviation of the measured values between two manometers exceeds the limit value: plausibility check of these measured values and identification of one or more defective manometers;
d) comparison of the measured pressure values of the manometers with at least one reference value, wherein manometers identified as defective in step c) are excluded from this comparison,
e) output of an error or status message from the comparison of the measured pressure values with each other and/or with the reference value.

2. Method according to claim 1,
**characterised in that**
an error message is triggered if the mutual comparison of the measured pressure values shows that at least two manometers indicate inconsistent measured values.

3. Method according to claim 2,
**characterised in that**
an error message is triggered if at least one manometer indicates that the pressure is below a specified minimum pressure or exceeds a specified maximum pressure.

4. Method according to one of the previous claims,
**characterised in that**
the measured pressure values and/or any error messages are transmitted to a remote control unit by cable or wirelessly.

5. Method according to claim 4,
**characterised in that**
the measured pressure values and/or any error messages are transmitted to the remote control unit as soon as it is located near the manometers.

6. Method according to claim 1,
**characterised in that**
the functionality of the manometers is checked by subjecting mobile ferromagnetic parts of the manometers to a magnetic pulse and detecting their subsequent movement visually or automatically on the basis of the temporary deviation of the displayed pressure values and, if the expected deviation does not occur, triggering an error message.

7. Method according to claim 1,
**characterised in that**
mobile ferromagnetic parts of the manometers are regularly subjected to a magnetic impulse in order to prevent them from growing stiff, so that they move.

8. Device for the remote monitoring of a fire extinguisher or installation, the fire extinguisher or installation containing an extinguishing agent under pressure, the device comprising at least two manometers each measuring a pressure value of the extinguishing agent independently of one another,
**characterised by** a comparison unit which is specifically designed for the purpose of comparing by itself the measured pressure values with one another, and of checking by itself whether a deviation in the measured values between the manometers exceeds a limit value, and of identifying by itself one or more defective manometers by means of a plausibility check of the measured values, and of comparing by itself the measured pressure values with at least one reference value, wherein the manometers identified as defective are excluded from this comparison, and of determining by itself an error or status message from the comparisons of the measured pressure values with one another or with the reference value.

9. Device according to claim 8,
**characterised in that**
the device has a transmission unit which transmits the measured pressure values, the error or status messages by cable or wireless connection.

10. Device according to claim 8,
**characterised in that**
the device has a display unit which shows the determined pressure values, the error or status messages.

11. device according to claim 8,
**characterised in that**
the device is in the form of a single and compact part.

12. device according to claim 8,
**characterised in that**
each manometer has movable ferromagnetic parts and is provided with a magnetic coil to which the device can apply an electrical pulse to generate a magnetic pulse which moves the ferromagnetic parts.

## Revendications

1. Méthode de surveillance à distance d'un appareil ou d'une installation d'extinction d'incendie, l'appareil ou l'installation d'extinction d'incendie contenant un agent d'extinction sous pression, et au moins deux manomètres mesurant chacun une valeur de pression de l'agent d'extinction indépendamment l'un de l'autre,
**caractérisée par** les étapes suivantes :
a) calcul de l'écart entre les valeurs de pression mesurées par deux manomètres ;
b) comparaison d'un écart calculé à l'étape a) avec une valeur limite ;
c) si un écart des valeurs mesurées entre deux manomètres dépasse la valeur limite : contrôle de la plausibilité de ces valeurs mesurées et identification d'un ou de plusieurs manomètres défectueux ;
d) comparaison des valeurs de pression mesurées des manomètres avec au moins une valeur de référence, les manomètres identifiés comme défectueux à l'étape c) étant exclus de cette comparaison,
e) émission d'un message d'erreur ou d'état résultant de la comparaison des valeurs de pression mesurées entre elles et/ou avec la valeur de référence.

2. Méthode selon la revendication 1,
**caractérisée en ce que**
un message d'erreur est déclenché si la comparaison réciproque des valeurs de pression mesurées montre qu'au moins deux manomètres indiquent des valeurs mesurées incohérentes.

3. Méthode selon la revendication 2,
**caractérisée en ce que**
un message d'erreur est déclenché si au moins un manomètre indique que la pression est inférieure à une pression minimale spécifiée ou supérieure à une pression maximale spécifiée.

4. Méthode selon l'une des revendications précédentes,
**caractérisée en ce que**
les valeurs de pression mesurées et/ou les éventuels messages d'erreur sont transmis à une unité de commande à distance par câble ou sans fil.

5. Méthode selon la revendication 4,
**caractérisée en ce que**
les valeurs de pression mesurées et/ou les éventuels messages d'erreur sont transmis à l'unité de commande à distance dès qu'elle se trouve à proximité des manomètres.

6. Méthode selon la revendication 1,
**caractérisée en ce que**
le fonctionnement des manomètres est vérifié en soumettant les pièces ferromagnétiques mobiles des manomètres à une impulsion magnétique et en détectant leur mouvement correspondant visuellement ou automatiquement sur la base de la fluctuation temporaire des valeurs de pression affichées, et si la fluctuation attendue ne se produit pas, un message d'erreur est déclenché.

7. Méthode selon la revendication 1,
**caractérisée en ce que**
les pièces ferromagnétiques mobiles des manomètres sont régulièrement soumises à une impulsion magnétique qui les empêche de se figer, de sorte qu'elles se meuvent.

8. Dispositif de surveillance à distance d'un appareil ou d'une installation d'extinction d'incendie, l'appareil ou l'installation d'extinction d'incendie contenant un agent d'extinction sous pression, le dispositif comportant au moins deux manomètres, dont chacun mesure une valeur de pression de l'agent d'extinction indépendamment l'un de l'autre,
**caractérisé par** une unité de comparaison qui est spécialement conçue pour comparer elle-même les valeurs de pression mesurées entre elles et pour vérifier elle-même si un écart des valeurs mesurées entre les manomètres dépasse une valeur limite, et pour identifier elle-même un ou plusieurs manomètres défectueux au moyen d'un contrôle de plausibilité des valeurs mesurées, et pour comparer elle-même les valeurs de pression mesurées avec au moins une valeur de référence, les manomètres identifiés comme défectueux étant exclus de cette comparaison, et pour déterminer elle-même un message d'erreur ou d'état à partir des comparaisons des valeurs de pression mesurées entre elles ou avec la valeur de référence.

9. Dispositif selon la revendication 8,
**caractérisé en ce que**
l'appareil dispose d'une unité de transmission qui transmet les valeurs de pression mesurées, les messages d'erreur ou d'état par connexion câblée ou par connexion sans fil.

10. Dispositif selon la revendication 8,
**caractérisé en ce que**
l'appareil est doté d'un écran qui affiche les valeurs de pression mesurées, les messages d'erreur ou d'état.

11. Dispositif selon la revendication 8,
**caractérisé en ce que**
l'appareil se présente sous la forme d'une pièce unique et compacte.

12. Dispositif selon la revendication 8,
**caractérisé en ce que**
chaque manomètre comporte des pièces ferromagnétiques mobiles et est muni d'une bobine magnétique à laquelle l'appareil peut appliquer une impulsion électrique pour générer une impulsion magnétique qui fait bouger les pièces ferromagnétiques.
